# EUROPÄISCHE PATENTSCHRIFT

(11) **EP 4 084 888 B1**
(45) Veröffentlichungstag und Bekanntmachung des Hinweises auf die Patenterteilung: **29.04.2026**
(21) Anmeldenummer: 21715136.4
(22) Anmeldetag: 08.03.2021
(51) Int. Cl.: B01D 39/16, A41D 13/11, A62B 18/02, A62B 23/02

(54) **FASERMATERIAL FÜR EINE ANTIBAKTERIELLE UND/ODER ANTIVIRALE VERWENDUNG, FILTER, MUND-NASEN-SCHUTZ SOWIE EINSATZ FÜR EINEN MUND-NASEN-SCHUTZ**
FIBRE MATERIAL FOR ANTIBACTERIAL AND/OR ANTIVIRAL USE, FILTER, MOUTH/NOSE PROTECTION AND INSERT FOR USE IN MOUTH/NOSE PROTECTION
MATÉRIAU FIBREUX POUR UTILISATION ANTIBACTÉRIENNE ET/OU ANTIVIRALE, FILTRE, PROTECTION BUCCALE/NASALE ET INSERT DANS LA PROTECTION BUCCALE/NASALE

(30) Priorität: 24.03.2020 DE 102020203783
(43) Veröffentlichungstag der Anmeldung: 09.11.2022
(73) Patentinhaber: Siemens Aktiengesellschaft, 80333 München (DE)
(72) Erfinder: JENSEN, Jens Dahl, 14050 Berlin (DE); KRÜGER, Ursus, 14089 Berlin (DE); WINKLER, Gabriele, 13587 Berlin (DE)
(74) Vertreter: Siemens Patent Attorneys
(86) Internationale Anmeldenummer: PCT/EP2021/055778
(87) Internationale Veröffentlichungsnummer: WO 2021/190912

(56) Entgegenhaltungen:
- EP-A1- 3 553 137
- WO-A2-03/080911
- CN-A- 110 812 949
- FR-A1- 2 876 044
- JP-A- H0 365 223
- KR-B1- 102 058 075

## Beschreibung

Die Erfindung betrifft ein Fasermaterial für eine antibakterielle und/oder antivirale Verwendung, einen Filter, einen Mund-Nasen-Schutz, einen Einsatz für einen Mund-Nasen-Schutz. Weiterhin offenbart ist ein Verfahren zum Herstellen eines Fasermaterials für eine antibakterielle und/oder antivirale Verwendung.

Ein derartiges Fasermaterial kann beispielsweise in antibakteriellen und/oder antiviralen Filtern oder chirurgischen Mund-Nasen-Schutzmasken zum Einsatz. Weiterhin kann das Fasermaterial in Filtern für Atemschutzvorrichtungen wie bspw. in der KR102058075B1 beschrieben oder in Klimaanlagen, die wechselnden Umgebungstemperaturen ausgesetzt sind, eingesetzt werden. Diese können im Einsatz oft durchfeuchtet werden, z. B. durch Luftfeuchtigkeit oder die in der Atemluft enthaltene Feuchtigkeit. Diese Durchfeuchtung ist im Regelfall unerwünscht und kann zu einem verderben und/oder der Notwendigkeit des Tausches der Filter führen.

Der Erfindung liegt die Aufgabe zugrunde, ein Fasermaterial anzugeben, das bei Durchfeuchtung eine verbesserte antibakterielle und/oder antivirale Wirkung aufweist. Es ist weiterhin Aufgabe der Erfindung einen Filter, einen Mund-Nasen-Schutz sowie Verfahren zum Herstellen eines Fasermaterials (nicht erfindungsgemäss) anzugeben.

Diese Aufgabe wird durch ein Fasermaterial gemäß Anspruch 1 gelöst. Das Fasermaterial für eine antibakterielle und/oder antivirale Verwendung umfasst dabei Fasern, die metallisches Silber und Mangan (IV)-oxid aufweisen, wobei das Mangan (IV)-oxid zumindest abschnittsweise das metallische Silber berührt und wobei das Mangan (IV)-oxid und das metallische Silber als Partikel vorliegen, die größer als 10 µm sind. Das Fasermaterial ist dabei vorzugsweise zur Verwendung für einen gasdurchlässigen Filter und/oder Mund-Nasen-Schutz ausgebildet.

Die vorliegende Erfindung ermöglicht es Fasermaterialien und daraus aufgebaute Filter weitestgehend frei von Mikroorganismen und Viren zu halten, selbst wenn diese durchfeuchtet sind. Im Falle von Mund Nasen Schutz Masken ist eine Durchfeuchtung der Schutzmaske ein Indiz diese zu entsorgen und durch eine neue zu ersetzen. Mit der vorliegenden Erfindung ist es möglich auch eine durchfeuchte Maske signifikant länger zu benutzen.

Es hat sich dabei herausgestellt, dass das Silber und das Mangan (IV)-oxid sehr gut auf Fasern aufgetragen werden können und mit der eigentlich unerwünschten Feuchtigkeit der Atemluft bzw. Umgebungsluft Sauerstoff sogenannte Sauerstoffradikale bilden, die auch als ROS (= reactive oxygen species) bekannt sind. Diese äußert reaktiven Sauerstoffspezies können Proteine, Lipide, RNA oder DNA, aus welchem Bakterien und Viren bestehen, derart zerstören, dass eine biochemische Reaktion entsteht und Bakterien und Viren unschädlich gemacht werden. Der Effekt wird dabei bei zunehmender Durchfeuchtung stärker und verbessert dabei die Standzeit bzw. die maximal erlaubte Verwendungsdauer eines solchen Fasermaterials und diese aufweisende Filter und Masken erheblich.

Die Fasern können beispielsweise als Zellstofffasern, wie Cellulose, Kunststofffasern, z. B. Polypropylen, insbesondere Mikrofasern aus Polypropylen, Keramikfasern oder Mischungen daraus ausgebildet sein und werden vorteilhaft als Fasermaterial in Bahnen auf Rollen bereitgestellt.

In einer weiteren Ausführungsform berührt das Mangan (IV)-oxid zumindest abschnittsweise das metallische Silber. Weiterhin liegen wobei das Mangan (IV)-oxid und das metallische Silber als Partikel vor, die größer als 10 µm sind. Mit aus dem Stand der Technik bekannten Sprühverfahren zum Auftrag von Lösungen, wie sie auch für die erfindungsgemäßen Verfahren zum Einsatz kommen können, sind Größen des entstehenden Präzipitats (d.h. die entstehenden Partikel bzw. Partikelan-häufungen) des Silbers und des Manganoxids größer als 10µm realisierbar. Durch die Größe von 10µm wird weiterhin vorteilhafterweise sichergestellt, dass es sich bei dem Präzipitat und dessen Partikel bzw. Partikelanhäufungen folglich nicht um nano-Partikel handelt. Weiterhin handelt es sich bei dem entstehenden Präzipitat und dessen Partikeln bzw. Partikelanhäufungen mit einer Mindestgröße von 10µm um nichtlungengängige Partikel, was gerade bei dem Einsatz in Mund-Nasen-Schutzmasken oder Atemluftfiltern essentiell ist, auch wenn die Anhaftung an das Fasermaterial sehr gut ist.

In einer weiteren Ausführungsform weist das Fasermaterial folgende Oberflächenzusammensetzung auf:
- 10 bis 25%, insbesondere 14 bis 20%, Silber,
- 10 bis 25%, insbesondere 16 bis 19 %, Mangan, wobei das Mangan insbesondere als ein Manganoxid vorliegt.

Die Oberflächenzusammensetzung kann dabei durch eine EDX-Analyse (Energiedispersive Röntgenspektroskopie) am Raster-elektronenmikroskop (REM) ermittelt werden. Mit der REM EDX-Analyse wird die chemische Elementzusammensetzung für ortsaufgelöste Materialanalysen bestimmt. Dieses Verfahren kann zur Analyse von Oberflächenzusammensetzung eingesetzt werden. Vorzugsweise weist die Oberflächenzusammensetzung weiterhin 10 bis 25%, insbesondere 12 bis 18%, Sauerstoff auf, wobei der Sauerstoff insbesondere zusammen mit dem Mangan als ein Manganoxid vorliegen kann. In anderen Worten ergibt sich die Oberflächenzusammensetzung auf dem Fasermaterial als eine auf der Oberfläche des Fasermaterials abgeschiedene Partikelverteilung (Anhäufungen von Partikeln / einzelne Partikel) des metallischen Silbers und des Mangan (IV)-oxids.

In einer weiteren Ausführungsform sind zumindest Teile des Mangan (IV)-oxid zumindest abschnittsweise zwischen den Fasern und dem Silber angeordnet. Es hat sich herausgestellt, dass so die Haftung des Silbers an den Fasern erheblich verbessert werden kann und gleichzeitig die antimikrobiell wirksame Verbindung bereits als Haftvermittler aufgetragen werden kann.

In einer weiteren Ausführungsform ist das Mangan (IV)-oxid zumindest abschnittsweise auf dem Silber angeordnet. Durch die Erfindungsgemäßen verfahren ist dies vorteilhaft realisierbar.

In einer weiteren Ausführungsform weist das metallische Silber bzgl. des Mangan (IV)-oxid ein Massenverhältnis von 200:1 bis 10:1 auf. Es hat sich gezeigt, dass bezüglich des Silbers nur sehr geringe Mengen an Manganoxid notwendig sind, um einen deutlich verbesserten antiviralen und antimikrobiellen Effekt zu erzielen.

In einer weiteren Ausführungsform weist das Mangan (IV)-oxid einen Massenanteil von 0,01 bis 0,5 Gew.-% bezüglich der Fasern auf. Es hat sich gezeigt, dass auch bezüglich der Fasern nur ein sehr geringer Anteil an Mangandioxid notwendig ist.

In einer weiteren Ausführungsform weist das metallische Silber einen Massenanteil von 0,1 bis 5 Gew.-% bezüglich der Fasern auf. Der Silberanteil kann im Vergleich zu bekannten mit silberbeschichteten Stoffen vorteilhaft besonders niedrig gehalten werden, da der Anteil an Mangandioxid zu einer deutlich erhöhten Reaktivität führt.

In einer weiteren Ausführungsform weisen die Fasern eine zumindest teilweise Beschichtung mit dem metallischen Silber und das Silber eine Dotierung mit dem Mangan (IV)-oxid auf.

In einer weiteren Ausführungsform ist das Fasermaterial als ein Vlies ausgebildet. Dabei sind beispielsweise Spunbond Vliesstoffe aus Polypropylen gut geeignet. Weitere Kunststoffvliese sind ebenso gut geeignet und lassen sich gut beschichten.

Die Aufgabe wird weiterhin durch einen Filter gelöst, der eine Filterschicht mit dem erfindungsgemäßen Fasermaterial aufweist. Der Filter ist vorzugsweise gasdurchlässig ausgebildet und kann dabei weitere Filterschichten aufweisen. So kann die Filterschicht aus dem erfindungsgemäßen Fasermaterial beispielsweise in weitere Filterschichten, wie bspw. einen Aktivkohlefilter, und Filterschichten zur Filterung von grobem Schmutz eingebettet sein. So kann der Filter neben der antibakteriellen und antiviralen Wirkung einfach um weitere Schichten mit weiteren Filtereigenschaften ergänzt werden.

Die Aufgabe wird weiterhin durch einen Mund-Nasen-Schutz gelöst, insbesondere eine chirurgische Maske, der eine Schicht aufweist, die ein erfindungsgemäßes Fasermaterial umfasst. In anderen Worten umfasst der Mund-Nasen-Schutz zumindest ein erfindungsgemäßes Fasermaterial. Die Schicht besteht dabei vorzugsweise vollständig aus dem Fasermaterial. Die Schicht, also das Fasermaterial, ist dabei so angeordnet, dass die Atemluft des Trägers der Maske beim Ein- und/oder Ausatmen durch die Schicht strömt. So kann selbst bei extremen Tragedauern und damit einhergehender großer Durchfeuchtung/Durchtränkung des Mund-Nasen-Schutzes mit Atemfeuchtigkeit ein deutlich verbesserter Schutz des Trägers vor Bakterien und Viren sichergestellt werden. Des Weiteren können so auch Dritte vor Bakterien und Viren geschützt werden, die vom Träger ausgehen, da diese beim Ausatmen bereits in der Maske zerstört werden.

In einer weiteren Ausführungsform weist der Mund-Nasen-Schutz eine Innenschicht und eine Außenschicht auf. Die Filterschicht ist dabei zwischen der Innenschicht und der Außenschicht angeordnet ist. So kann die Filterschicht auf die optimale antivirale Wirkung optimiert werden während Außen- und Innenschicht weitere Funktionen erfüllen können.

In einer weiteren Ausführungsform weist der Mund-Nasen-Schutz eine wasserabweisende, z.B. hydrophobe, Außenseite auf, die durch die Atemluft durchströmbar ist. Vorzugsweise ist die Außenseite als ein flüssigkeitsabweisendes Vlies ausgebildet, sodass potenziell infektiöse Tröpfchen gar nicht erst auf die Filterschicht dringen. Es ist ebenso denkbar, dass die erfindungsgemäße Filterschicht eine Außenseite aufweist, die hydrophob beschichtet ist. Ergänzend oder alternativ weist der Mund-Nasen-Schutz eine Innenschicht auf, die der Mundpartie eines Trägers des Mund-Nasen-Schutz zugewandt ist und vorzugsweise als ein hautverträgliches Vlies, z. B. ein Polypropylen-Vlies, ausgebildet ist. Dieser Schichtaufbau ist besonders von Vorteil, wenn die Masken in großindustriellem Maßstab gefertigt werden und im professionellen Bereich Anwendung finden.

Da Bakterien und Viren in der Atemluft abgetötet werden, können die antibakteriell und antiviral wirkenden Fasermatten aus dem erfindungsgemäßen Fasermaterial als Atemschutzmaske oder in einem Mund-Nasen-Schutz vorteilhaft sowohl für infizierte und nicht infizierte Personen angewandt werden. Durch die längere Schutzwirkung kann eine Knappheit in Klinken und Pflegeeinrichtungen vermieden werden. Die Fasermatten können in allen Filterarten eingesetzt werden, zum Beispiel in speziellen Luftreinigungsfilter für tragbare Atmungsschutzgeräte, in den die Luftreinigungsfilter ausgetauscht werden müssen. Eine Anwendung in Klimaanlagen zur Filterung von feuchter Raumluft von Gebäuden und Fahrzeugen ist ebenso denkbar. Im Klinikbereich können Untersuchungsgeräte und Beatmungsgeräte durch den Einsatz der erfindungsgemäßen Filter verbessert werden.

Die Aufgabe wird weiterhin durch einen Einsatz zur Verwendung mit einem herkömmlichen Mund-Nasen-Schutz gelöst. Der Einsatz ist so ausgebildet, dass er in einen bestehenden Mund-Nasen-Schutz eingelegt oder darauf aufgeklebt werden kann. Der Einsatz weist eine Filterschicht auf, die ein erfindungsgemäßes Fasermaterial aufweist und so angeordnet werden kann, dass durch den Einsatz hindurch ein- und/oder ausgeatmet werden kann. Der Einsatz hat den Vorteil, dass nur die Filterschicht gefertigt werden muss und somit bestehende und große Mengen an Masken schnell und einfach damit ausgerüstet werden können.

Die Aufgabe wird weiterhin durch eine Atemschutzmaske aufweisend zumindest einen erfindungsgemäßen Filter gelöst. Der Filter bzw. die Filterschicht kann dabei in einen Atemschutzfilter integriert sein. Der Filter kann dabei weitere ABC-Schutzfunktionen aufweisen.

Auf das bereitgestellte Roh-Fasermaterial kann eine erste Menge Mangan(II)-Nitrat oder Mangan(II)-Acetat und eine ersten Menge Kaliumpermanganatlösung auf das Roh-Fasermaterial aufgebracht werden, um Mangan(IV)-Oxid auf dem Roh-Fasermaterial (2) zu bilden. Es hat sich herausgestellt, dass auf diese Weise insbesondere Polymervliese, wie Polypropylen oder Polyethylen, die hydrophobe Eigenschaften aufweisen, erheblich besser beschichtet werden können. Es hat sich gezeigt, dass die erste, sehr geringe Menge Mangan(IV)-Oxid die hydrophoben Eigenschaften erheblich verringert und so eine bessere Beschichtung mit Silber ermöglicht. Die Haftfestigkeit der so entstehenden Beschichtung also die Anhaftung des entstehenden Präzipitats an das Fasermaterial wird ebenfalls erheblich verbessert. Die verwendeten Lösungen können vorzugsweise simultan, z.B. über entsprechende Düsensysteme aufgebracht werden.

Insbesondere nachdem die erste Menge Mangan(IV)-Oxid aufgebracht wurde, kann eine Silberionen aufweisende Lösung und ein Reduktionsmittels zur Reduktion der Silberionen zu metallischem Silber auf dem Roh-Fasermaterial aufgebracht werden. Das Reduktionsmittel und die Silberionen aufweisende Lösung können vorzugsweise simultan, z.B. über ein entsprechendes Düsensystem, aufgebracht werden.

Insbesondere als darauf folgender Schritt wird eine zweite Menge von Mangan(II)-Nitrat oder Mangan(II)-Acetat und eine zweiten Menge Kaliumpermanganatlösung, zum Bilden von Mangan(IV)-Oxid auf das insbesondere bereits mit Silber versehene Roh-Fasermaterial aufgebracht. Die zweiten Mengen sind dabei größer als die ersten Mengen, insbesondere um einen Faktor 5 oder mehr. Die erste Menge dient zur Herabsetzung der Hydrophobie und ist dabei bereits vorteilhaft ein Teil des antimikrobiell wirksamen Präzipitats.

Ein Verfahren zum Herstellen eines Fasermaterials für eine antibakterielle und/oder antivirale Verwendung umfasst dabei die folgenden Schritte, die beispielsweise in der folgenden Reihenfolge ausgeführt werden können:
- Bereitstellen eines Roh-Fasermaterials,
- Aufbringen einer Silberionen aufweisenden Lösung auf das Roh-Fasermaterial,
- Aufbringen eines Reduktionsmittels zur Reduktion der Silberionen zu metallischem Silber auf dem Roh-Fasermaterial (2),
- Aufbringen einer Kaliumpermanganatlösung auf das Roh-Fasermaterial und
- Aufbringen von Mangan (II)-Nitrat oder Mangan (II)-Acetat, die jeweils z. B. in basischer Lösung vorliegen, zum Bilden von Mangan (IV)-Oxid aus der Kaliumpermanganatlösung auf dem Roh-Fasermaterial.

Die Silberionen aufweisende Lösung kann dabei eine Silbersalzlösung sein. Das Verfahren kann dabei vorteilhaft auf Bahnen des Fasermaterials durchgeführt werden, indem beispielsweise in einer Fertigungsstraße zunächst das metallische Silber aufgebracht wird und anschließend das Mangan (IV)-Oxid. Der große Vorteil ist, dass die Bahnen mit hoher Geschwindigkeit durch Düsen besprüht werden können und somit große Mengen des Fasermaterials herstellbar sind.

Es hat sich gezeigt, dass durch das Verfahren eine sehr gute Anhaftung des Silbers an das Fasermaterial und insbesondere auch des Mangan (IV)-Oxid an das Fasermaterial entsteht. Dies ermöglicht es erst, das vorliegende Fasermaterial in Atemluft-Filtern einzusetzen.

Ein Verfahren zum Herstellen eines Fasermaterials für eine antibakterielle und/oder antivirale Verwendung kann alternativ oder ergänzend zum vorhergehenden Verfahren durchgeführt werden. Das Verfahren umfasst die Schritte:
- Bereitstellen eines elektrisch leitfähigen Roh-Fasermaterials,
- Bereitstellen eines Gleichstroms, wobei das Roh-Fasermaterials als Kathode, also an den Minuspol einer Gleichstromquelle angeschlossen ist,
- Aufbringen einer Silberionen aufweisenden Lösung auf das Roh-Fasermaterial, insbesondere durch eine Düse, die eine Anode aus einem Ti/Pt-Draht oder einem Ti/Pt-Gitter aufweist, wobei die Anode dabei an den Pluspol der Gleichstromquelle angeschlossen ist,
- elektrochemisches Abscheiden von metallischem Silber auf dem Roh-Fasermaterial aus der Lösung,
- Aufbringen einer Kaliumpermanganatlösung und
- Aufbringen von Mangan (II)-Nitrat oder Mangan (II)-Acetat, die jeweils z. B. in basischer Lösung vorliegen, zum Bilden von Mangan (IV)-Oxid aus der Kaliumpermanganatlösung.

Im Folgenden wird die Erfindung anhand der in den Figuren dargestellten Ausführungsbeispiele näher beschrieben und erläutert. Es zeigen:
- FIG 1: ein Verfahren zum Herstellen eines erfindungsgemäßen Fasermaterials,
- FIG 2: ein alternatives oder ergänzendes Verfahren zum Herstellen eines erfindungsgemäßen Fasermaterials
- FIG 3: ein Mund-Nasen-Schutz mit dem erfindungsgemäßen Fasermaterial als Filter.

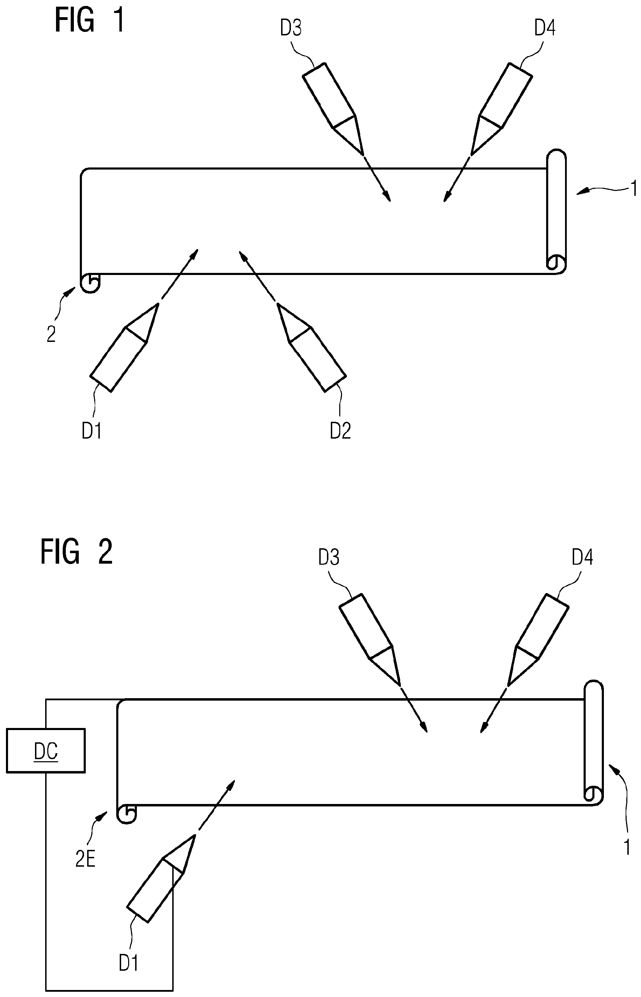

FIG 1 zeigt eine Spritztechnik zur Herstellung eines beschichteten Fasermaterials 1, das auf einer schematisch dargestellten Rolle auf der rechten Seite der FIG 1 aufgerollt wird. Über eine erste Düse D1 wird eine wasserlösliche Silbersalzlösung (z. B. Silbernitrat oder Silberacetat) auf ein Roh-Fasermaterial 2 gesprüht, das in Bahnen von einer schematisch dargestellten Rolle auf der linken Seite der FIG 1 zur Verfügung gestellt wird. Über eine zweite Düse D2 wird ein Reduktionsmittel (z. B. Natriumhypophosphit oder organische Reduktionsmittel wie z. B. Aldosen z. B. Glukose) auf das Roh-Fasermaterial 2 gesprüht, wobei das Reduktionsmittel dazu dient, die Silberionen zu metallischem Silber zu reduzieren. Die einzelnen Sprühvorgänge der Düsen D1, D2 können dabei gleichzeitig oder nacheinander, z. B. in vorgegebenen Taktzeiten, auf das Roh-Fasermaterial 2 einwirken.

Nachdem das Roh-Fasermaterial 2 mit der Silbersalzlösung und dem Reduktionsmittel besprüht wurde, folgt eine Abscheidung von Mangan (IV)-Oxid - auch Braunstein genannt - auf dem nun mit metallischem Silber versehenen Roh-Fasermaterial 2. Dazu wird über die eine dritte Düse D3 Kaliumpermanganatlösung und über eine vierte Düse D4 Mangan-(II)-Nitrat oder Mangan(II)-Acetat jeweils in basischer Lösung gespritzt. Über eine Kom-proportionierung (ein Spezialfall einer Redoxreaktion) wird aus Mn +7 und Mn +2 Braunstein hergestellt. Zur Beschleunigung der chemischen Reaktion kann die Fasermatte durch eine geeignete Wärmequelle beheizt werden. Die so entstehende Verbindung der Fasern des Fasermaterials 1 mit dem Silber und dem Braunstein eignet sich sehr gut, um das Fasermaterial 2 in Atemluftfiltern und Mund-Nasen-Schutzmasken einzusetzen.

In FIG 2 wird eine Düse D1 dargestellt, die eine Elektrode aus einem Ti/Pt-Draht oder aus einem Ti/Pt-Gitter aufweist und mit einer Gleichstromquelle DC verbunden ist. In dieser Ausführungsform wird das metallische Silber über einen elektrochemischen Sprayprozess aus der Elektrolytlösung abgeschieden. Dazu muss ein Roh-Fasermaterial 2E bereitgestellt werden, das elektrisch leitfähig ist. Elektrisch leitfähiges Fasermaterial 2E ist z.B. in Form von Fasermatten im Handel erhältlich. Alternativ kann eine elektrisch nicht leitfähiges Roh-Fasermaterial 2 mit speziellen Lösungen behandelt werden, die das elektrisch nicht leitfähige Roh-Fasermaterial 2 mit einer elektrisch leitfähigen Schicht versehen und damit das Roh-Fasermaterial 2 elektrisch Leitfähig machen. Besonders vorteilhaft sind hier Materialien, die im lebenden Organismus als Spurenelement vorkommen und nicht giftig sind (z. B. Cu oder Zn). Das Roh-Fasermaterial 2E dient dabei insbesondere als Kathode, ist also an den Minuspol der Gleichstromquelle DC angeschlossen. Der Ti/Pt-Draht oder das Ti/Pt-Gitter in der ersten Düse D1 dient als Anode, wobei die Anode dabei insbesondere an den Pluspol der Gleichstromquelle DC angeschlossen ist. So kann alternativ oder ergänzend zur FIG 1 elektrochemisch das Silber abgeschieden werden. Auch so kann eine sehr gute Verbindung mit den Fasern erreicht werden. Mangandioxid (Mangan (IV)-Oxid) wird anschließend wie zum Sprühverfahren in FIG 1 beschrieben aus einer Kaliumpermanganat- und Mangan (II)-Salzlösung mittels den Düsen D3 und D4 aufgetragen.

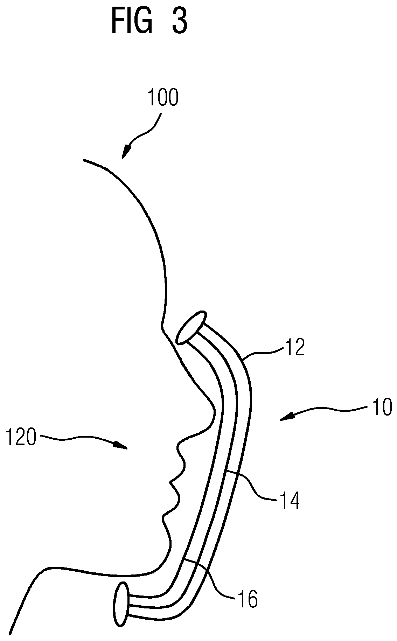

FIG 3 zeigt einen Kopf einer Person 100 mit einer Mund-Nasen-Partie 120. Die Mund-Nasen-Partie 120 ist dabei von einem Mund-Nasen-Schutz 10 abgedeckt. Der Mund-Nasen-Schutz 10 weist dabei drei Schichten auf, Eine Außenschicht 12, eine Innenschicht 16 sowie eine Filterschicht 14, die ein gemäß der vorliegenden Erfindung beschichtetes Fasermaterial 1 aufweist. Die Schichten 12, 14, 16 können dabei am Rand verschweißt sein, sodass ein guter Zusammenhalt entsteht. Der Mund-Nasen-Schutz 10 weist dabei üblicherweise ein Befestigungsmittel auf, das zum Beispiel um den Kopf der Person 100 oder an den Ohren der Person 100 befestigt werden kann. Der so entstehende Mund-Nasen-Schutz 10 kann dabei länger getragen werden als ein vergleichbarer Mund-Nasen-Schutz aus dem Stand der Technik, da durch eine Durchfeuchtung durch die Atemluft eine erweiterte antivirale und antibakterielle Wirkung entsteht.

Zusammenfassend betrifft die Erfindung ein Fasermaterial für eine antibakterielle und/oder antivirale Verwendung, dass bei Durchfeuchtung eine verbesserte antibakterielle und/oder antivirale Wirkung aufweist. Weiterhin betrifft die Erfindung einen Filter, einen Mund-Nasen-Schutz, einen Einsatz für einen Mund-Nasen-Schutz sowie eine Atemschutzmaske.

## Patentansprüche

1. Fasermaterial (1) für eine antibakterielle und/oder antivirale Verwendung umfassend Fasern, die
- metallisches Silber und
- Mangan (IV)-oxid aufweisen,
wobei das Mangan (IV)-oxid zumindest abschnittsweise das metallische Silber berührt und wobei das Mangan (IV)-oxid und das metallische Silber als Partikel vorliegen, die größer als 10 µm sind.

2. Fasermaterial (1) nach Anspruch 1, aufweisend eine Oberflächenzusammensetzung, die mittels einer Energiedispersive Röntgenspektroskopie am Rasterelektronenmikroskop ermittelt wird:
- 10 bis 25%, insbesondere 14 bis 20 %, Silber,
- 10 bis 25%, insbesondere 16 bis 19 %, Mangan,
wobei das Mangan, insbesondere als ein Manganoxid, vorliegt.

3. Fasermaterial (1) nach einem der vorhergehenden Ansprüche, wobei zumindest Teile des Mangan (IV)-oxids zumindest abschnittsweise zwischen den Fasern und dem Silber angeordnet sind.

4. Fasermaterial (1) nach einem der vorhergehenden Ansprüche, wobei das Mangan (IV)-oxid zumindest abschnittsweise auf dem Silber angeordnet ist.

5. Fasermaterial (1) nach einem der vorhergehenden Ansprüche, das als ein Vlies ausgebildet ist.

6. Filter, insbesondere gasdurchlässiger Filter, aufweisend zumindest eine Filterschicht (14), die ein Fasermaterial (1) nach einem der Ansprüche 1 bis 5 aufweist.

7. Mund-Nasen-Schutz (10), insbesondere chirurgische Maske, aufweisend eine Filterschicht (14), die ein Fasermaterial (1) nach einem der Ansprüche 1 bis 5 umfasst.

8. Mund-Nasen-Schutz (10) nach Anspruch 7, wobei die Filterschicht (14) zwischen einer Innenschicht (16) und einer Außenschicht (12) angeordnet ist.

9. Mund-Nasen-Schutz (10) nach Anspruch 7 oder 8, aufweisend eine wasserabweisende Außenschicht, die vorzugsweise als ein flüssigkeitsabweisendes Vlies ausgebildet ist, und eine Innenschicht (16), die der Mundpartie eines Trägers (100) des Mund-Nasen-Schutz (10) zugewandt ist und vorzugsweise als ein hautverträgliches Polypropylen-Vlies ausgebildet ist.

10. Einsatz zur Verwendung mit einem Mund-Nasen-Schutz (10), aufweisend eine Filterschicht (14), die ein Fasermaterial (1) nach einem der Ansprüche 1 bis 5 umfasst.

11. Atemschutzmaske aufweisend zumindest einen Filter nach Anspruch 6.

## Claims

1. Fibre material (1) for antibacterial and/or antiviral use, comprising fibres having
- metallic silver and
- manganese(IV) oxide,
wherein the manganese(IV) oxide contacts the metallic silver at least in sections and wherein the manganese (IV) oxide and the metallic silver are present as particles larger than 10 µm.

2. Fibre material (1) according to Claim 1, having a surface composition, determined by means of an energy-dispersive X-ray spectroscopy on a scanning electron microscope:
- 10% to 25%, in particular 14% to 20%, of silver,
- 10% to 25%, in particular 16% to 19%, of manganese,
wherein the manganese is in particular present as a manganese oxide.

3. Fibre material (1) according to either of the preceding claims, wherein at least parts of the manganese (IV) oxide are arranged at least in sections between the fibres and the silver.

4. Fibre material (1) according to any of the preceding claims, wherein the manganese (IV) oxide is arranged at least in sections on the silver.

5. Fibre material (1) according to any of the preceding claims, configured as a nonwoven.

6. Filter, in particular gas-permeable filter, having at least one filter layer (14) that has a fibre material (1) according to any of Claims 1 to 5.

7. Mouth/nose protector (10), in particular surgical mask, having a filter layer (14) that comprises a fibre material (1) according to any of Claims 1 to 5.

8. Mouth/nose protector (10) according to Claim 7, wherein the filter layer (14) is arranged between an inner layer (16) and an outer layer (12).

9. Mouth/nose protector (10) according to Claim 7 or 8, having a water-repellent outer layer preferably configured as a liquid-repellent nonwoven, and an inner layer (16) facing the mouth region of a wearer (100) of the mouth/nose protector (10) and preferably configured as a skin-compatible polypropylene nonwoven.

10. Insert for use with a mouth/nose protector (10), having a filter layer (14) that comprises a fibre material (1) according to any of Claims 1 to 5.

11. Respiratory protection mask having at least one filter according to Claim 6.

## Revendications

1. Matériau fibreux (1) pour une utilisation antibactérienne et/ou antivirale comportant des fibres, lesquelles comprennent
- de l'argent métallique et
- de l'oxyde de manganèse (IV),
dans lequel l'oxyde de manganèse (IV) touche au moins par sections l'argent métallique et dans lequel l'oxyde de manganèse (IV) et l'argent métallique sont présents sous la forme de particules qui font plus de 10 µm.

2. Matériau fibreux (1) selon la revendication 1, comprenant une composition de surface, laquelle est déterminée au microscope électronique à balayage au moyen d'une spectroscopie de rayons X à dispersion d'énergie :
- de 10 à 25 %, en particulier de 14 à 20 %, d'argent,
- de 10 à 25 %, en particulier de 16 à 19 %, de manganèse,
dans lequel le manganèse est présent en particulier sous la forme d'un oxyde de manganèse.

3. Matériau fibreux (1) selon l'une des revendications précédentes, dans lequel au moins des parties de l'oxyde de manganèse (IV) sont disposées au moins par sections entre les fibres et l'argent.

4. Matériau fibreux (1) selon l'une des revendications précédentes, dans lequel l'oxyde de manganèse (IV) est disposé au moins par sections sur l'argent.

5. Matériau fibreux (1) selon l'une des revendications précédentes, lequel est conçu sous la forme d'un non-tissé.

6. Filtre, en particulier filtre perméable aux gaz, comprenant au moins une couche filtrante (14), laquelle comprend un matériau fibreux (1) selon l'une des revendications 1 à 5.

7. Protection bucco-nasale (10), en particulier masque chirurgical, comprenant une couche filtrante (14), laquelle comporte un matériau fibreux (1) selon l'une des revendications 1 à 5.

8. Protection bucco-nasale (10) selon la revendication 7, dans laquelle la couche filtrante (14) est disposée entre une couche interne (16) et une couche externe (12).

9. Protection bucco-nasale (10) selon la revendication 7 ou la revendication 8, comprenant une couche externe imperméable à l'eau, laquelle est conçue de préférence sous la forme d'un non-tissé imperméable aux liquides, et une couche interne (16), laquelle est tournée vers la bouche d'un porteur (100) de la protection bucco-nasale (10) et est conçue de préférence sous la forme d'un non-tissé de polypropylène hypoallergénique.

10. Insert destiné à être utilisé avec une protection bucco-nasale (10), comprenant une couche filtrante (14), laquelle comporte un matériau fibreux (1) selon l'une des revendications 1 à 5.

11. Masque de protection respiratoire comprenant au moins un filtre selon la revendication 6.
